# EUROPEAN PATENT APPLICATION

(11) **EP 4 399 967 A1**
(43) Date of publication of application: **17.07.2024**
(21) Application number: 23386004.8
(22) Date of filing: 23.01.2023
(51) Int. Cl.: A01K 29/00, A01K 47/06, A01K 55/00

(54) **MULTI-POINT THERMAL SENSING AND SOUND RECORDING MICRODEVICE CAPABLE OF DETECTING CRITICAL BEEHIVE CONDITIONS**

(30) Priority: 12.01.2023 GR 20230100020
(71) Applicant: Lime Technology Ike, 45221 Ioannina (GR); Kontogiannis, Sotirios, 45221 Ioannina (GR)
(72) Inventor: Bellos, Christos, 45221 Ioannina (GR); Stefanou, Konstantinos, 45221 Ioannina (GR); Stergios, Georgios, 45221 Ioannina (GR); Kontogiannis, Sotirios, 45221 Ioannina (GR)

(57) **Abstract**

This invention introduces a new microdevice for detecting critical beehive conditions. It is an end-node device installed inside a beehive. It can record sound, point temperature probing, humidity sensing, sensory measurements logging, execution of detection algorithms regarding beehive conditions, and transmission of measurements or detection results in real-time.

The microdevice includes at least one up to six temperature sensor probes attached using 1m wires to its main processor unit. In addition, it includes a temperature and humidity sensor placed in the outer left surface of its plastic enclosure and a sound recording lavalier microphone with cable extension that can be placed on top of the beehive frames. The microdevice is installed inside the lid of the beehive, using screws through the mounting holes located on the device's waterproof frame. The microdevice and its components of sensors, microphone, processor unit, communications transponder, and periodic on/off actuator are illustrated in Drawing 1.

The end-node device can record and store temperature, humidity, and raw sound data on the device's data storage unit. In addition, the device-included processor can adequately run machine learning algorithms to predict swarming, detect queen loss, decrease or increase in population, and low/high/temperature critical variations among the beehive frames. The device's measurements or detections can be periodically sent via its WiFi wireless transceiver, supported by an appropriate WiFi infrastructure, to a suitable mobile phone notification application over the Internet.

The microdevice is mounted on the inside surface of the beehive lid. It is an autonomous powered device powered externally using a suitable battery supply placed under a small photovoltaic panel. The microdevice also includes a power control circuit capable of initiating periodic device activations that conserve the energy of its external power source.

## Description

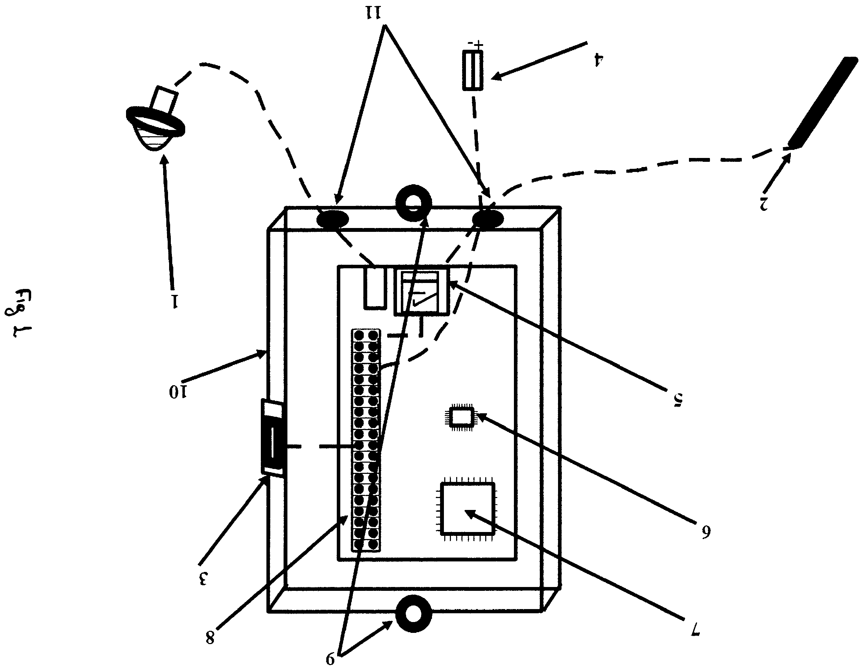

The microdevice invention capable of detecting beehive conditions is a device capable of data-logging, detecting, and alerting critical state conditions inside the beehive. The operation of the microdevice is described below by way of example and with reference to Drawing 1. The microdevice includes the following sensors and actuators for data sensing and acquisition: A central humidity-temperature sensor (Drawing 1(3)), 1-6 temperature sensor probes for point measurements, and a sound recording lavalier microphone.

The microdevice includes a microprocessor placed on a board with a Wi-Fi transponder (Drawing 1(6)), volatile and non-volatile memory and an input-output interface. The volatile memory is used for the execution of the microdevice control logic and loading data models over the air for the detection of critical conditions detection algorithms. The non-volatile memory is used for periodic measurements and data logging. In addition, the temperature and humidity sensors of the device are attached to the input-output interface. The Wi-Fi transponder connects as a client to nearby Wi-Fi access points and transmits detections and periodic data measurements. The microdevice can transmit its measurements or detections using appropriate telemetry protocols. The wireless transceiver connects as a client to the appropriate access point and periodically transmits the detections as well as the measurements over the Internet.

The microdevice has the ability to record the temperature in the individual beekeeping frames using from 1 to 6 waterproof temperature sensors probes (Drawing 1(2)), recording the temperature inside the lid of the beekeeping hive as well as the humidity in the lid inside the bee hive (Drawing 1(3)), as well as recording the sound of the bees inside the bee hive using a recording microphone with a range of 0-22 kHz (Drawing 1(4)). The device is capable of executing machine learning algorithms to provide detections from its measurements in real-time. It is also capable of updating its trained machine-learning models over the air. This is achieved by using an appropriate binary data transmission protocol. A detailed description of the operation of the device is given in the disclosure of the invention paragraph that follows.

Drawing 1 shows the outer frame-plastic sealed enclosure of the invention (Drawing 1(10)), in which the above sensors are interconnected with the processor of the microdevice through a suitable input-output interface (Drawing 1(8)). The plastic housing includes two or four support holes (Drawing 1(9)) where the frame of the micro-device is screwed to the inner part of the lid of the beehive. The height of the plastic sealing frame (Drawing 1(10)) is 45 mm and does not prevent the opening and closing of the lid. This particular invention is designed for easy installation in Langstroth-type beehives.

The top of the sealed plastic frame (Drawing 1(10)) is transparent so that the power supply photodiode of the processor board (Drawing 1(6)) is visible. At the bottom surface of the waterproof housing, there are two sealed holes where suitable packings are fitted (Drawing 1(11)). The microdevice power supply cable, microphone cable, and temperature sensors probe cables are tightened and taken out of the microdevice from these seals.

The invention also includes an over-the-air programmable power actuator that controls the periodic On/Off device intervals (Drawing 1(5)). The actuator can be programmed over Wi-Fi using appropriate telemetry protocols.

Disclosure of the invention. The present microdevice invention works as follows:
1. Periodically collects information on point temperature conditions within the beehive frames (1-6 temperature measurement points).
2. Periodically collect the temperature and humidity as it forms on the lid (inside) of the bee hive as a reference temperature point.
3. Periodically collects 1-5 minute audio recordings in the frequency range of 1-22 kHz.
4. The microdevice connects via its wireless Wi-Fi transceiver to a nearby wireless network. It transmits raw measurements and detection alerts to a suitable Data Collection Information System on the Internet. These measurements are sent via an appropriate telemetry channel and protocol.
5. The microdevice includes trained machine learning models capable of predicting swarming, detecting queen loss, predicting-detecting population decline or increase, and detecting critical temperature values and point temperature variations within the bee hive. The detections of the machine learning models are sent via an appropriate telemetry channel directly to the Data Collection Information System. Machine learning models can also automatically update remotely from the Data Collection Information System via wireless device activation.
6. The microdevice is powered externally by a suitable power source or a battery. In addition, the device includes a special On-Off actuator capable of scheduling the microdevice operation this function through the Data Collection Information System.

The advantages of the invention are as follows:
Extreme conditions probing/monitoring - related to critical temperature and humidity readings inside the bee hive due to extreme weather events.

By using temperature, humidity, and sound, detection of possible swarming and prediction of its occurrence. Detection of queen loss in the bee hive. Detecting variations in the beehive population proportional to the presence of food in the environment or the development of diseases such as varroa and nosemiasis.

Autonomous operation and detection conditions/recording of measurements in the device in case there is no network/Internet connectivity. Periodic and on-demand data transmissions of both the measurements and the detections via the Wi-Fi transceiver of the device. The autonomous operation of the device is achieved by using the device power actuator control and the On/Off timing circuit of this operation. The microdevice can operate as an autonomous powered device powered externally using a suitable 12V battery supply placed under a small 20W/12V photovoltaic panel with a voltage regulator 12V-to-5V attached. The microdevice also includes a power control circuit capable of initiating periodic device activations that conserve the energy of its external power source.

### Introduction

This is a microdevice invention capable of detecting beehive conditions. It is an autonomous sensing, detection, and alerting device for critical conditions inside a beehive. It includes a number of built-in temperature sensory probes ( one up to six), a temperature-humidity sensor, and a microphone. It can acquire periodic measurements. It can store the measurements in the device's microprocessor storage unit and send them remotely via its wireless Wi-Fi transceiver, integrated into the microprocessor's board. In addition, the invention can execute machine learning algorithms to detect critical conditions such as stress, possible swarming, population reduction, and loss of the queen within the beekeeping hive. The microdevice includes a remotely programmable power control actuator. The invention sends measurements using its microprocessor board Wi-Fi transceiver to the nearest Wi-Fi wireless access point.

### Characteristic part

The microdevice can periodically sense and datalog temperature, humidity, and sound measurements. For its precise operations, it includes several waterproof temperature probes. The number of probes attached and used can vary from 1 up to 6, as illustrated in (Drawing 1(2)). It also includes a temperature-humidity sensor acting as an external conditions reference point, as illustrated in (Drawing 1(3)), placed outside the end-node device plastic frame. The temperature probes are extended outside the device using coaxial cables (Drawing 1(2)).

An appropriate plastic enclosure with a transparent screwable cap encloses the invention, as illustrated in (Drawing 1(10)). The device's audio recording lavalier microphone (Drawing 1(1)) extends outside the device with a flexible cable. The microdevice stores the audio and temperature data on the processor's data storage memory card (Drawing 1(7)). The processor also includes a volatile memory for loading models and executing algorithms for detecting critical beehive conditions.

These data measurements and detections are transmitted to the cloud through the microdevice wireless transceiver (Drawing 1(6)) using a suitable telemetry protocol. The device is mounted using screws to the beehive lid through the two screw mounting holes (Drawing 1(9)). The device is powered by an external 12V power supply battery which is connected to the device via suitably configured terminals (Drawing 1(4)). The device also includes (inside its plastic enclosure) a remotely time-programmable actuator for periodically interrupting its power supply feed from the external power supply (Drawing 1(5)). This actuator's On and Off periods can also be programmed remotely using telemetry protocol. The temperature sensor probes (Drawing 1(2)) and the temperature-humidity sensor (Drawing 1(3)) are connected to the microdevice processor via a suitable processor input/output port interface (Drawing 1(8)). Up to a total of six temperature sensor probes can be connected through this port using cables extending out of the microdevice plastic frame via two suitable seal holes (Drawing 1(11)). Throughout these holes pass, the microdevice's power cable, the temperature probe cables, and the lavalier

## Claims

1. The microdevice invention includes one up to six waterproof temperature probe sensors placed between the frames and can be attached to the device (Drawing 1(2)). In addition, the invention includes up to six corresponding temperature probing sensors connected to the input-output interface of the microdevice processor board (Drawing 1(8)) using 20cm up to 1m PVC cables.

2. The microdevice invention is enclosed in a plastic watertight frame with a transparent lid on the top of the frame using screws (Drawing 1(10)). It is mounted using screws on the lid of the beekeeping hive through its plastic frame support holes (Drawing 1(9)). The mounting holes may be either two in the center of the bottom base of the watertight frame or four, one at each edge of the waterproof frame. The frame includes the microprocessor and microprocessor board, the transceiver, and the power actuator.

3. The microdevice invention includes a temperature-humidity sensor (Drawing 1(3)) placed on the outer surface of the waterproof frame of the invention (Drawing 1(10)).

4. The microdevice invention includes a microprocessor unit and microprocessor board with input-output interfaces. The board can store measurements in non-volatile and includes volatile memory to execute machine learning algorithms to detect critical conditions (Drawing 1(7)).

5. The microdevice invention includes a sound recording lavalier microphone connected to the processor of the invention via a serial interface (Drawing 1(1)). The microphone is placed outside the microdevice plastic enclosure using a flexible cable cord (Drawing 1(1)), attached to the microdevice board.

6. The microdevice invention capable of detecting beehive conditions includes a Wi-Fi transceiver capable of sending the measurements or detections of the device. It is located near the device processor, in the processor board (Drawing 1(6)).

7. The microdevice invention capable of detecting beehive conditions is externally powered by a 5V power supply/battery (Drawing 1(4)). The power supply cables of the device, the cables of the temperature sensor probes (Drawing 1(1)), and the microphone cable (Drawing 1(2)) pass out the device's plastic frame via holes (Drawing 1(11)), in the bottom surface of the devices' plastic enclosure (Drawing 1(10)), where appropriate seals apply for mounting and weatherproof purposes.

8. The microdevice invention includes a suitable electronic over-the-air programmable actuator circuit inside its plastic enclosure, periodically interrupting the microdevice power supply (Drawing 1(5)). In addition, the actuator can be programmed wirelessly for the time of operation and non-operation when the system is in operation.
